# EUROPEAN PATENT APPLICATION

(11) **EP 2 826 556 A1**
(43) Date of publication of application: **21.01.2015**
(21) Application number: 13176975.4
(22) Date of filing: 18.07.2013
(51) Int. Cl.: B01J 21/04, B01J 23/755, B01J 37/00

(54) **Supported metal-based oxygen carrier and use in a chemical-looping process cycle**

(71) Applicant: VITO NV (Vlaamse Instelling voor Technologisch Onderzoek NV), 2400 Mol (BE)
(72) Inventor: The designation of the inventor has not yet been filed
(74) Representative: Jansen, Cornelis Marinus

(57) **Abstract**

The present invention describes an oxygen carrier suitable for oxidizing a carbonaceous material consisting essentially of a porous aluminate support provided with redox active sites, characterized, in that said oxygen carrier is comprised of 45 wt-% to 80 wt-% of said support and of 20 wt-% to 55 wt-% of said redox active sites, whereby said redox active sites are substantially homogeneously distributed in said support phase and whereby said redox active sites are nickel (II) oxide.

The invention further describes a method for production of such an oxygen carrier and the use thereof in a chemical-looping process cycle.

## Description

### TECHNICAL FIELD

The current invention relates to a metal-based oxygen carrier on a support and the use of such a material in a chemical-looping process cycle.

More specifically, the current invention relates to a nickel-based oxygen carrier on an alumina-based support for conversion of a carbonaceous liquid or gas or solid to carbon dioxide in a chemical-looping process cycle.

### INTRODUCTION

Chemical-looping process is a process in which a metal oxide is employed as an oxidizer for e.g. CH₄, H₂ or CO conversion in a fluidized bed reactor. The reduced metal is brought to a separate fluidized bed reactor and oxidized using oxygen from an air flow. Finally, the thus obtained metal oxide is re-used in the oxidation reaction.

A metal oxide suited for the process of carbonaceous liquids or gases in a chemical-looping process cycle are designated by the term "oxygen carrier." Oxygen carriers are mostly based on Cu, Ni, Co, Fe, or Mn.

The advantage of a chemical-looping process cycle is that the presence of N₂ in the flue gas stream is avoided since the oxidation of the combustion material such as a fuel takes places in absence of nitrogen or trace compounds present in the air. As such, a high energetic efficiency is obtained, and the exhaust of the oxidation reactor mainly contains water and carbon dioxide and no N₂.

The development of suitable oxygen carrier is of paramount importance for the efficiency of the chemical-looping process. Ideally, an oxygen carrier fulfills the following criteria:
- sufficient oxygen transfer capability;
- favorable thermodynamics regarding the conversion to CO₂;
- high reactivity in reduction and oxidation reactions which is maintained during many successive redox cycles;
- resistance to attrition to minimize losses of elutriated solids;
- negligible carbon deposition that would release CO₂ in the air reactor reducing CO₂ capture efficiency;
- good fluidization properties (absence of agglomeration); and
- limited cost, including environment, health and safety cost.

Compositions suitable as oxygen carrier are known from literature.

WO2004014793 describes compositions and methods to reduce NOₓ emissions from the flue gas of a fluid catalytic cracking (FCC) unit. The document also provides methods for reducing CO emissions from the regenerator and/or the flue of an FCC unit. The compositions described in the document comprise copper and/or cobalt and a carrier. The carrier can be, for example, hydrotalcite like compounds, spinels, alumina, zinc titanate, zinc aluminate, zinc titanate/zinc aluminate, and the like.

WO2012140292 relates to an oxygen carrier that can be obtained by means of a method that comprises: a) mixing 30% to 60% by weight of CuO and 40% to 70% by weight of MgAl₂O₄; b) subjecting the above mixture to a step of spray-drying; c) screening the material obtained in the preceding step until a particle size of between 100 and 500 microns is obtained; d) calcining the screened particles, resulting in the oxygen-carrying material. A further subject matter of the document is the use of said material in a solid combustion process with inherent CO₂ capture.

Unfortunately, most oxygen carriers have limited oxygen transfer capability, oxidation reactivity or resistance to attrition, suffer from poisoning through carbon deposition and/or a high economic and environmental cost.

More particularly, current technologies suffer from limited oxidation activity and a limited longevity under process conditions.

The aim of the present invention is to provide a solution to overcome at least part of the above mentioned disadvantages. The invention thereto aims to provide an oxygen carrier suitable for oxidizing a carbonaceous material consisting essentially of a porous aluminate support provided with redox active sites. In particular, the invention provides an oxygen carrier comprised of 45 wt-% to 80 wt-% of said support and of 20 wt-% to 55 wt-% of said redox active sites, whereby said redox active sites are substantially homogeneously distributed in said support phase and whereby said redox active sites are nickel (II) oxide as described in claim 1.

### SUMMARY OF THE INVENTION

The current invention provides in a solution for at least one of the above mentioned problems by providing a metal-based oxygen carrier on a support as described in claim 1 and a use of such a material in a chemical-looping process cycle as described in claim 14.

In a first aspect, the invention provides in an oxygen carrier suitable for oxidizing a carbonaceous material consisting essentially of a porous aluminate support provided with redox active sites. Said oxygen carrier is comprised of 45 wt-% to 80 wt-% of said support and of 20 wt-% to 55 wt-% of said redox active sites, whereby said redox active sites are substantially homogeneously distributed in said support phase and whereby said redox active sites are nickel (II) oxide.

This is advantageous, since an optimal compromise is obtained between good physical properties, such as crushing strength and resistance to attrition, and high chemical activity in redox reactions.

In a preferred embodiment, the present invention provides an oxygen carrier comprising preferably 30 wt-% to 40 wt-% of nickel (II) oxide and 60 wt-% to 70 wt-% of support.

In a most preferred embodiment, the present invention provides an oxygen carrier comprising most preferably 37 wt-% of nickel (II) oxide and 63 wt-% of support.

This is advantageous, since a most optimal compromise is obtained between good physical properties, such as crushing strength and resistance to attrition, and high chemical activity in redox reactions.

In a preferred embodiment, the present invention provides an oxygen carrier, whereby said support is a ceramic phase, preferably an aluminate, and at least one cation, preferably selected from the group: Ca²⁺ , Ni²⁺ and Mg²⁺.

This is advantageous, since the proper selection of the cation allows for optimizing properties such as better conversion of fuel to CO₂ and reduced formation of CO.

In a preferred embodiment, the present invention provides an oxygen carrier, whereby said oxygen carrier is a powder consisting of particles whereby at least 80% of said particles have a size comprised between 50 µm and 350 µm.

This is advantageous, since a uniform distribution of the particle size allows for good fluidization and easy application of the material in a chemical-looping process.

In a preferred embodiment, the present invention provides an oxygen carrier, whereby the attrition of said oxygen carrier is at most 1.0 % after 1 hour and at most 7.0 % after 5 hours.

This is advantageous, since low levels of attrition allow for high longevity of the oxygen carrier in a chemical-looping process and for maintaining a high activity and stability of the oxygen carrier in a chemical-looping process.

In a preferred embodiment, the present invention provides an oxygen carrier, whereby the crushing strength of said oxygen carrier is comprised between 0.1 N and 10 N, more preferably between 1 N and 10 N.

This is advantageous, since high levels of crushing strength allow for high longevity of the oxygen carrier in a chemical-looping process and for maintaining a high activity and stability of the oxygen carrier in a chemical-looping process.

In a preferred embodiment, the present invention provides an oxygen carrier, whereby the sphericity, expressed by its aspect ratio, of said particles is at least 0.75.

This is advantageous, since a high sphericity of the particles allows for good flowing and fluidizing properties, low attrition and high stability of the material in a chemical-looping process.

In a preferred embodiment, the present invention provides an oxygen carrier, whereby the NiAl₂O₄ support material has a cubic crystal structure with a lattice parameter comprised between 7.900 Å and 8.200 Å and whereby the crystallite size of the support material is comprised between 10 nm and 100 nm.

In a preferred embodiment, the present invention provides an oxygen carrier, whereby the porosity of said particle is comprised between 15% to 60%.

This is advantageous, since a high porosity of the particle allows for good accessibility of the active redox sites and good transport of oxygen and carbonaceous material to the active redox sites and good evacuation of carbon dioxide from the porous structure away from the redox active sites. In addition, high porosity of the material generally results in a high specific surface of the material and consequently yields a high number of redox active site on or at the surface.

In a preferred embodiment, the present invention provides an oxygen carrier, whereby the crystallite size of free nickel (II) oxide is comprised between 1 and 80 nm and whereby said nickel (II) oxide has a rhombohedral crystal structure with lattice parameters a and b comprised between 5.700 Å and 6.100 Å and lattice parameter c comprised between 7.000 Å and 7.300 Å.

This is advantageous, since a small crystallite size or the free NiO allows for good reactivity of the oxygen carrier.

In a preferred embodiment, the present invention provides an oxygen carrier, obtainable by a method comprising the steps of:
a. suspending nickel (II) oxide and aluminum oxide in deionized water in a 1:1.5 to 1:2.4 ratio thereby obtaining a suspension;
b. adding organic additives such as organic binders and dispersants to said suspension;
c. spray-drying said suspension thereby obtaining a spray-dried powder;
d. sieving said spray-dried powder thereby obtaining a sieved powder;
e. sintering said sieved powder, preferably for at least 30 minutes at 1300°C to 1600°C thereby obtaining said oxygen carrier.

In a second aspect, the invention provides in a method for production of said oxygen carrier comprising the steps of:
a. suspending nickel (II) oxide and aluminum oxide in deionized water in a 1:1.5 to 1:2.4 ratio thereby obtaining a suspension;
b. adding organic additives such as organic binders and dispersants to said suspension;
c. spray-drying said suspension thereby obtaining a spray-dried powder;
d. sieving said spray-dried powder thereby obtaining a sieved powder;
e. sintering said sieved powder thereby obtaining said oxygen carrier.

Thereby, nickel (II) oxide and aluminum oxide are suspended in deionized water in a 1:1.5 to 1:2.4 ratio, said organic additives are organic binders and/or dispersants, said suspension is spray-dried through a 2-fluid spray-dry nozzle positioned in the lower cone part of a spray-drier, sintering takes place under an oxygen atmosphere at temperatures between 1100°C and 1700°C, preferably between 1300°C and 1500°C, for at least 30 minutes, more preferably for a period between 1 and 16 hours.

As such, these parameter ranges have been identified as necessary and optimized parameters for obtaining an oxygen carrier with good crushing strength and high redox activity, and good fluidization properties.

In a preferred embodiment, the present invention provides a method, whereby 0.1 wt-% to 20 wt-% of MgO and/or Ca(OH)₂ is added to said suspension.

This is advantageous, since the addition of MgO or the addition of MgAl₂O₄ to the suspension yields an oxygen carrier with enhanced conversion of fuel to carbon dioxide, in case the fuel is for example, but not limited to methane.

This is also advantageous, since the addition of MgO or the addition of MgAl₂O₄ to the suspension yields an oxygen carrier with enhanced temperature resistance and mechanical strength and reduced tendency to defluidization of the oxygen carrier up to temperatures above 1100°C.

In addition, this is advantageous, since the addition of Ca(OH)₂ to the suspension yields an oxygen carrier with enhanced crushing strength.

In a third aspect, the invention provides in a use of said oxygen carrier in a chemical-looping process for the oxidation of said carbonaceous material to carbon dioxide at a temperature between 700°C and 1200°C, preferably at a temperature between 800°C and 1000°C.

Thereby, said oxygen carrier is used to perform an oxidation reaction and/or whereby said oxygen carrier is subsequently re-oxidized and used for one or more redox reactions.

More specifically, said oxidation reaction relates to a reaction according to equation (A) and/or (B):

CₙH₂ₘ + (2n+m) MₓO_{y} ↔ n CO₂ + m H₂O + (2n+m) MₓO_{y-1} (A)

O₂ + 2 MₓO_{y-1} ↔ 2 MₓO_{y} (B)

In a preferred embodiment, the present invention provides a use of said oxygen, whereby said carbon dioxide is captured by carbon dioxide capturing means, the heat produced is used for heating an air and/or fuel reactor or for the purpose of generating hot air, water or other fluids, or for the purpose of generating steam or electricity.

This is advantageous, since the carbon dioxide produced can be stored and used for other processes and since the use of the heat produced for heating the reactors or for generating electricity allows for an energetically more advantageous process.

### DESCRIPTION OF THE FIGURES

The following figures are intended to assist the description of the invention and are nowhere meant as a limitation of the presently disclosed invention.

The figures and symbols contained therein have the meaning as commonly understood by one of ordinary skill in the art to which this invention belongs. By means of further guidance, figures are included to better appreciate the teaching of the present invention.
Figure 1 shows a schematic representation of a dual circulating fluidized bed reactor system.
Figure 2 shows a schematic representation of a dual circulating fluidized bed reactor system with indication of an evacuation unit for carbon dioxide and water.

### DETAILED DESCRIPTION OF THE INVENTION

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:

"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The current invention provides in a solution for at least one of the above mentioned problems by providing a metal-based oxygen carrier on a support and a use of such a material in a chemical-looping combustion cycle as described in claims 1-15.

The term "chemical-looping process" or "chemical-looping process cycle" indicates any chemical-looping processes, such as, but not limited to combustion processes, reforming and biomass pyrolysis.

In a first aspect, the invention provides in an oxygen carrier suitable for oxidizing a carbonaceous material consisting essentially of a porous aluminate support provided with redox active sites. Said oxygen carrier is comprised of 45 wt-% to 80 wt-% of said support and of 20 wt-% to 55 wt-% of said redox active sites, whereby said redox active sites are substantially homogeneously distributed in said support phase and whereby said redox active sites are nickel (II) oxide.

The term "oxygen carrier" is used to indicate a material comprising at least two components, wherein the function of a first component is to form an active site for oxidation and reduction reactions as given in the reactions below:

CₙH₂ₘ + (2n+m) MₓO_{y} ↔ n CO₂ + m H₂O + (2n+m) MₓO_{y-1} (A)

O₂ + 2 MₓO_{y-1} ↔ 2 MₓO_{y} (B)

and wherein the function of a second component is to form a support in which the first component is contained or acts as a support for the first component. The active site is generally a metal oxide, based on Fe, Cu, Ni, Co or Mn, preferably based on Ni. In general, the material is a particle with a spherical form or a form which is nearly spherical.

An oxygen carrier as described above is advantageous since it has high strength and activity in a chemical combustion oxidation process and high longevity, allowing said oxygen carrier eventually to be used for more than 2.500 hours, more preferably than 10.000 hours, even more preferably more than 20.000 hours, most preferably more than 40.000 hours in an oxidation process. Furthermore, said oxygen carrier can be recovered from the reactor system and be recycled for further use.

The term "carbonaceous material" is used to indicate any material containing inorganic or organic bound carbon. Inorganic bound carbon indicates any carbon in an inorganic molecule such as in, but not limited to, carbon monoxide, cyanide, diamond or graphite. Organic bound carbon indicates any carbon in an organic molecule such as in, but not limited to, alkanes, alkenes, alkynes and/or aromatic hydrocarbons and/or hydrocarbons containing hetero-atoms.

In a preferred embodiment, the present invention provides an oxygen carrier comprising preferably 30 wt-% to 40 wt-% of nickel (II) oxide and 60 wt-% to 70 wt-% of support.

In a most preferred embodiment, the present invention provides an oxygen carrier comprising most preferably 37 wt-% of nickel (II) oxide and 63 wt-% of support.

In a preferred embodiment, the present invention provides an oxygen carrier, whereby said support is a ceramic phase preferably aluminate, and at least one cation, preferably selected from the group: Ca²⁺, Ni²⁺ and Mg²⁺.

In a preferred embodiment, the present invention provides an oxygen carrier, whereby said oxygen carrier is a powder consisting of particles whereby at least 80% of said particles have a size comprised between 50 µm and 350 µm.

In a preferred embodiment, the present invention provides an oxygen carrier, whereby the attrition of said oxygen carrier is at most 1.0 % after 1 hour and at most 7.0 % after 5 hours.

In a more preferred embodiment, the present invention provides an oxygen carrier, whereby the attrition of said oxygen carrier is at most 0.5 % after 1 hour and at most 5.0 % after 5 hours.

The term "attrition" refers to the phenomenon of physical wear that is the result of erosion or the material degradation or loss of mechanical properties that is the result of friction. Attrition is measured using the Air Jet method (ASTM5757) and is expressed as the fraction of material loss expressed as a weight percentage.

In a preferred embodiment, the present invention provides an oxygen carrier, whereby the crushing strength of said oxygen carrier is comprised between 0.1 N and 10 N, more preferably between 1 N and 10 N. In a more preferred embodiment, the present invention provides an oxygen carrier, whereby the crushing strength of said oxygen carrier is comprised between 1 N and 7 N. In a more preferred embodiment, the present invention provides an oxygen carrier, whereby the crushing strength of said oxygen carrier is about 3 N.

The term "crushing strength" is used to indicate the load required to cause a crack to form in a sintered metal powder bearing (ASTM B-438 and B-439). Crushing strength is measured using a handheld Shimpo FGN-5 or an Instron 5582 test bench and is expressed in Newton, N.

In a preferred embodiment, the present invention provides an oxygen carrier, whereby the sphericity, which is expressed by its aspect ratio, of said particles is at least 0.75.

In a more preferred embodiment, the present invention provides an oxygen carrier, whereby the sphericity, which is expressed by its aspect ratio, of said particles is at least 0.85.

In a most preferred embodiment, the present invention provides an oxygen carrier, whereby the sphericity, which is expressed by its aspect ratio, of said particles is at least 0.90.

The term "sphericity" of a particle refers to the degree in which a particle is spherical and is determined by scanning electron microscope, abbreviated as SEM, or optical microscopy, eventually supported by Image Analysis. The sphericity is expressed by the aspect ratio, which is herein to be understood as the ratio of the smallest diameter of a sphere with the same volume of the given particle to the largest diameter of the particle. The aspect ratio equals 1 for a spherical object and is smaller than 1 for any object which is not spherical.

In a preferred embodiment, the present invention provides an oxygen carrier, whereby the support material has a cubic crystal structure with a lattice parameter comprised between 7.900 Å and 8.200 Å and whereby the crystallite size of the support material is comprised between 10 nm and 100 nm.

In a more preferred embodiment, said lattice parameter is comprised between 7.900 Å and 8.100 Å, more preferably between 8.000 Å and 8.100 Å, most preferably between 8.030 Å and 8.060 Å.

In a more preferred embodiment, said NiAl₂O₄ crystal size is comprised between 20 nm and 90 nm, as defined by standard X-ray diffraction methodology, even more preferably between 30 nm and 80 nm, most preferably between 40 nm and 70 nm.

In a preferred embodiment, the present invention provides an oxygen carrier, whereby the porosity of said particle is comprised between 15% and 60%.

The term "porosity" is used to indicate the fraction of a material that is void or empty relative to the total volume of a material. Porosity is thus expressed as a percentage between 0% and 100%. The characteristics of porosity are expressed through the specific surface area, measured by N₂ physisorption, and through pore size distribution or tortuosity, measured by Hg intrusion.

In a preferred embodiment, the present invention provides an oxygen carrier, whereby the crystallite size of free nickel (II) oxide is comprised between 1 and 80 nm and whereby said nickel (II) oxide has a rhombohedral crystal structure with lattice parameters a and b comprised between 5.800 Å and 6.000 Å and lattice parameter c comprised between 7.000 Å and 7.300 Å.

In a more preferred embodiment, said lattice parameters a and b is comprised between 5.700 Å and 6.100 Å, more preferably between 5.850 Å and 5.950 Å, most preferably between 5.900 Å and 5.930 Å.

In a more preferred embodiment, said lattice parameter c is comprised more preferably between 7.100 Å and 7.200 Å, most preferably between 7.150 Å and 7.250 Å.

The term "crystallite" is used to indicate small, microscopic crystals bound together by defective boundaries , thus constituting a polycrystalline solid.

In a preferred embodiment, the present invention provides an oxygen carrier, obtainable by a method comprising the steps of:
a. suspending nickel (II) oxide and aluminum oxide in deionized water in a 1:1.5 to 1:2.4 ratio thereby obtaining a suspension;
b. adding organic additives such as organic binders and dispersants to said suspension;
c. spray-drying said suspension thereby obtaining a spray-dried powder;
d. sieving said spray-dried powder thereby obtaining a sieved powder;
e. calcining said sieved powder, preferably for at least 30 minutes at 1100°C to 1600°C thereby obtaining a calcined powder;
f. sintering said calcined powder, preferably for at least 30 minutes at 1100°C to 1600°C thereby obtaining said oxygen carrier.

Aluminum oxide has a general formula of Al₂O₃, and can be suspended or dissolved in the aqueous solution in the form of different crystal structures, for example, but not limited to α-Al₂O₃ or γ-Al₂O₃.

Alternatively, aluminum oxide can be suspended or dissolved in the aqueous solution in a hydrated form, such as Al₂O₃.*n*H₂O where n is a number between 1 and 25, more preferably between 1 and 12.

Alternatively, aluminum oxide can be suspended or dissolved in the aqueous solution as a chemically related compound, such as Al₂O₄²⁻, or a salt thereof, such as but not limited to, Na₂Al₂O₄, NiAl₂O₄, MgAl₂O₄ or CaAl₂O₄, preferably NiAl₂O₄.

Nickel (II) oxide has a general formula of NiO, and can be suspended or dissolved in the aqueous solution in the form of different crystal structures, for example, but not limited to, octahedral and can be used in its non-stoichiometric form where the Ni:O ratio deviates from a 1:1 ratio.

Alternatively, nickel (II) oxide can be suspended or dissolved in the aqueous solution as a nickel-based salt, such as for example, but not limited to, Ni(NO₃)₂.6H₂O, or a nickel salt whereby nickel is a bivalent cation.

The term "spray-drying" is used to indicate the method or the process of forming a dry powder comprised of solid particles from a liquid or a suspension by rapidly drying the liquid or suspension with a hot gas. A typical spray dryer consists of a spray nozzle or an atomizer for forming droplets with a controlled size distribution, which are consecutively brought in a flow of hot air, thereby evaporating the solvent, whereby the solvent can be water, and forming particles with consistent size distribution.

Alternatively to a spray-drying process for the formation of the particles, other known processes for the formation of granulates can be used, such as, but not limited to, pan granulation, high shear granulation or alternatively an impregnation process as described below is used.

The term "impregnation" is used to indicate a method or process of forming a dry powder comprised of a support and an active metal oxide. Typically, a metal precursor is dissolved or suspended in solution, preferably an aqueous solution, and brought into contact with a preformed support. The active metal precursor forms a deposit in the pores of the support.

The term "calcination" is a synonym of the term "calcining" and is used to indicate a process of thermal treatment, whereby a material is heated in presence of air with the purpose of thermally decomposing certain compounds, for example, but not limited to, organic substances, whereby the organic substance can contain functional groups such as, but not limited to hydroxyl groups, or inorganic substances comprising for example, but not limited to, carbonates, contained in the material and subsequently removing of the volatile fraction.

The term "sintering" is used to indicate a process whereby a powder is heated according to a predetermined temperature profile to a temperature below the melting point of the material, consequently fusing the particles together through atomic diffusion across boundaries of the particles.

In a second aspect, the invention provides in a method for production of said oxygen carrier comprising the steps of:
a. suspending nickel (II) oxide and aluminum oxide in deionized water in a 1:1.5 to 1:2.4 ratio thereby obtaining a suspension;
b. adding organic additives such as organic binders and dispersants to said suspension;
c. spray-drying said suspension thereby obtaining a spray-dried powder;
d. sieving said spray-dried powder thereby obtaining a sieved powder;
e. calcining said sieved powder thereby obtaining a calcined powder;
f. sintering said calcined powder thereby obtaining said oxygen carrier.

Thereby, nickel (II) oxide and aluminum oxide are suspended in deionized water in a 1:1.5 to 1:2.4 ratio, said organic additives are organic binders and/or dispersants, said suspension is spray-dried through a 2-fluid spray-dry nozzle positioned in the lower cone part of a spray-drier, sintering takes place under an oxygen atmosphere at temperatures between 1100°C and 1700°C, preferably between 1300°C and 1500°C, for at least 30 minutes, preferably for 4 hours.

In a preferred embodiment, the present invention provides a method, whereby 0.1 wt-% to 20 wt-% of MgO and/or Ca(OH)₂ is added to said suspension.

In a more preferred embodiment, the present invention provides a method, whereby 1 wt-% to 10 wt-% of MgO and/or Ca(OH)₂ is added to said suspension.

In a third aspect, the invention provides in a use of said oxygen carrier in a chemical-looping process cycle for the oxidation of said carbonaceous material to carbon dioxide at a temperature between 700°C and 1200°C, preferably at a temperature between 800°C and 1000°C.

Thereby, said oxygen carrier is used to perform an oxidation reaction and/or whereby said oxygen carrier is subsequently re-oxidized and used for one or more redox reactions.

More specifically, said oxidation reaction relates to a reaction according to equation (A) and/or (B):

CₙH₂ₘ + (2n+m) MₓO_{y} ↔ n CO₂ + m H₂O + (2n+m) MₓO_{y-1} (A)

O₂ + 2 MₓO_{y-1} ↔ 2 MₓO_{y} (B)

The term "first fluidized bed reactor" is used as synonym for the term "air reactor." The air reactor (1) comprises a valve for an oxygen rich air inflow (3) and a valve for an oxygen depleted air outflow (4), whereby the oxygen content of the air outflow (4) is lower than the oxygen content of the air inflow (3). In addition, the air reactor (1) is in a first fluid connection (7) with a second fluidized bed reactor (2) for transferring the oxidized oxygen carrier and is in a second, separate fluid connection (8) for transferring the reduced oxygen carrier to the first fluidized bed reactor (1).

The term "second fluidized bed reactor" is used as synonym for the term "fuel reactor." The fuel reactor (2) comprises a fuel inlet valve (5) and an outlet valve (6) for the outlet of carbon dioxide (10) and other components such as, for example, water (9). The fuel reactor (2) is in connection with the air reactor (1) as described in the paragraph above.

The term "dual circulating fluidized bed reactor system" is used to indicate any system comprising a first fluidized bed reactor and a second fluidized bed reactor, whereby the first fluidized bed reactor is in dual fluid connection with the second fluidized bed reactor, whereby the first fluid connection is used for transfer of a material from the first to the second reactor and whereby the second fluid connection is used for transfer of another material from the second to the first reactor.

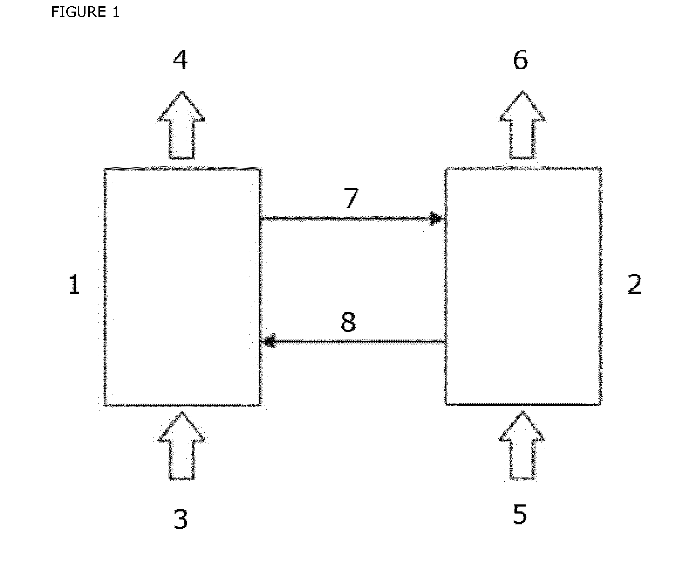

Figure 1 shows a schematic representation of a dual circulation fluidized bed reactor system as described in the above paragraphs. An oxygen rich air flow (3) is continuously led into the air reactor (1). In the air reactor (1), oxygen carrier is oxidized by oxygen from the air. An oxygen depleted air flow (4) is evacuated from the air reactor (1). The oxidized oxygen carrier is transferred via a fluid connection (7) to the fuel reactor (2). Fuel (5), for example a carbonaceous material, is continuously led into the fuel reactor (2). In the fuel reactor (2), carbonaceous material is oxidized and the oxygen carrier is reduced. Carbon dioxide and water are evacuated from the fuel reactor (2). The reduced form of the oxygen carrier is transferred to the air reactor (1) via a fluid connection (8).

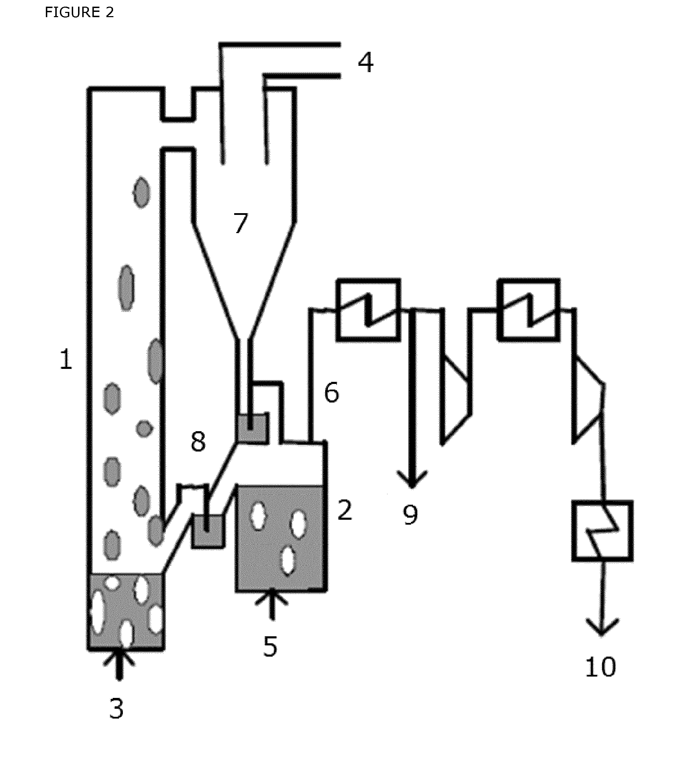

Figure 2 shows a schematic representation of a dual circulation fluidized bed reactor system with indication of separation unit for carbon dioxide and water. An oxygen rich air flow (3) is continuously led into the air reactor (1). In the air reactor (1), oxygen carrier is oxidized by oxygen from the air. An oxygen poor air flow (4) is evacuated from the air reactor (1). The oxidized oxygen carrier is transferred via a fluid connection (7) to the fuel reactor (2). Fuel (5), for example a carbonaceous material, is continuously led into the fuel reactor (2). In the fuel reactor (2), carbonaceous material is oxidized and the oxygen carrier is reduced. The reduced form of the oxygen carrier is transferred to the air reactor (1) via a fluid connection (8). Carbon dioxide (10) and water (9) are evacuated from the fuel reactor (2) and further treated and separated using a water condenser and compressors.

In chemical-looping combustion, CO₂ is separated from the rest of the flue gases without an energy consuming gas separation process. Hence, this technique has emerged as an attractive option to other CO₂ separation techniques, and as an alternative by which fossil fuels can be utilized without contributing to an increased atmospheric CO₂ concentration. The technique involves the use of metal (M) oxide particles with the purpose of transferring oxygen from an air reactor (1) to a fuel reactor (2). In the fuel reactor (2), the fuel in gaseous form reacts with the metal oxide according to reaction (A) and in the air reactor (1) the reduced metal (M) oxide is re-oxidized according to reaction (B);

CₙH₂ₘ + (2n+m) MₓO_{y} ↔ n CO₂ + m H₂O + (2n+m) MₓO_{y-1} (A)

O₂ + 2 MₓO_{y-1} ↔ 2 MₓO_{y} (B)

The exhaust gas stream (6) from the fuel reactor (2) contains CO₂ (10) and H₂O (9), which are separated in a condenser before CO₂ is compressed to a liquid, suitable for sequestration. The air reactor exhaust (4) contains oxygen depleted air. The total amount of heat evolved from reaction (A) and (B) is the same as for traditional combustion, where the oxygen and fuel are in direct contact. A proposed design of the process is displayed in Figure 2, where the air reactor (1) is a riser with a gas velocity high enough to entrain the oxygen carrier particles. Oxidized particles are separated from the flue gases in a cyclone, and led to the fuel reactor (2) where they are reduced by the gaseous fuel and transported back to the air reactor (1) by gravitation or under influence of the gas flow. Particle locks prevent gas mixing between the two reactors. This design appears similar to a circulating fluidized bed boiler for solid fuels, thus using well proven technology and components.

In a preferred embodiment, the present invention provides a use of said oxygen, whereby said carbon dioxide is captured by carbon dioxide capturing means, the heat produced is used for heating an air and/or fuel reactor or for the purpose of generating hot air, water or other fluids, or for the purpose of generating steam or electricity.

The term "carbon dioxide capturing means" is used to indicate any means intended to prevent or suitable for preventing carbon dioxide to enter the atmosphere. Possible methods for carbon dioxide capture, storage or sequestration are based on physical sequestration by for example, but not limited to, geological storage, ocean storage or storage under pressure or based on chemical sequestration by for example, but not limited to, mineral storage or storage upon reaction with a chemical base.

### EXAMPLES

Oxygen carrier particles with high sphericity, good free-flowing properties and homogeneity on the micro-scale, were prepared by the industrial spray-drying method, using commercial raw or semi-finished materials. In order to do so, a powder mixture of inorganic materials were dispersed in deionized water with the necessary organic additives as described in the following paragraphs.

Polyethyleneoxide and/or polyvinylalcohol and/or polyethyleneglycol were used as organic binder, next to various commercially available dispersants.

Appropriate amounts of the above materials were weighed before suspending in deionized water. The suspension was homogenized either by milling in a planetary ball mill for small quantities or by means of an horizontal attrition mill for larger amounts.

The water-based suspension was continuously stirred with a propeller blade mixer while being pumped to the 2-fluid spray dry nozzle, positioned in the lower cone part of the spray drier (type 6.3-SD, Niro, Denmark). Inlet air temperature was 220°C, outlet air temperature was 210°C. A flow of 210 kg/h was maintained. After spray drying, the fraction within the required particle size range (100-212 µm) was separated from the rest of the spray dried product by sieving the chamber fraction. In order to obtain oxygen carrier particles with sufficient mechanical strength, sintering was performed in air at top temperatures in the range of 1300°C to 1500°C for 4 hours, using high temperature furnaces.

Several embodiments of the invention were prepared and are reported below.

### EXAMPLE 1

A preparation of an oxygen carrier involves suspending 50.45 wt-% of NiO, 26.33 wt-% of Al₂O₃ in 20.21 wt-% of water, and the remaining parts being dispersants and organic binders. The suspension is then milled for 30 minutes in a planetary ball mill using Si₃N₄ 10mm as a milling medium. Subsequently, the suspension is spray-dried with a NIRO 6.3 SD spray-dryer with a 2-fluid nozzle type using an inlet air at 220°C at 210 kg/h. The suspension flow was adjusted to 27.3 kg/h. As such, a green powder is obtained. The obtained powder was sieved using a 100-212 µm sieve, yielding 1.48 kg of powder (35%). This powder was then calcined using a Vecstar furnace with air at the following temperature profile: RT/50/500/60/60/1150/60/150/RT (RT/°C.h⁻¹/°C/min/°C.h⁻¹/°C/min/°C.h⁻¹/RT). Subsequently, the powder was sintered using an Oyten furnace with air at the following temperature profile: RT/300/1400/360/300/RT (RT/°C.h⁻¹/°C/min/°C.h¹/RT). As such, an oxygen carrier is obtained comprising 65.71 wt-% of NiO and 34.29 wt-% of support.

### EXAMPLE 2

A preparation of an oxygen carrier involves suspending 40.03 wt-% of NiO, 24.56 wt-% of Al₂O₃ in 28.07 wt-% of water, and the remaining parts being Ca(OH)₂, MgO, dispersants and organic binders. The suspension is then milled for 30 minutes in a planetary ball mill using Si₃N₄ 10mm as a milling medium. Subsequently, the suspension is spray-dried with a NIRO 6.3 SD spray-dryer with a 2-fluid nozzle type using an inlet air at 220°C at 210 kg/h. The suspension flow was adjusted to 9.75 kg/h. As such, a green powder is obtained. The obtained powder was sieved using a 100-212 µm sieve, yielding 1.02 kg of powder (32%). This powder was then calcined using a Bouvier furnace with air at the following temperature profile: RT/60/500/60/100/1400/240/150/RT (RT/°C.h⁻¹/°C/min/°C.h⁻¹/°C/min/°C.h⁻¹/RT). Subsequently, the powder was sintered using an Entech furnace with air at the following temperature profile: RT/60/500/60/100/1600/240/150/RT (RT/°C.h⁻¹/°C/min/°C.h⁻¹/RT). As such, an oxygen carrier is obtained comprising 58.57 wt-% of NiO, 35.93 wt-% of support, 0.60 wt-% of Ca(OH)₂ and 4.90 wt-% of MgO.

### EXAMPLE 3-22

Table 1 offers an overview of various embodiments of the invention with regard to the composition of the suspension. A preparation of an oxygen carrier involves suspending amounts of NiO and Al₂O₃, as reported in Table 1, in water, with addition of dispersants and organic binders. The mixture is then processed as described in the paragraphs above. As such, oxygen carriers are obtained comprising between 45 wt-% and 80 wt-% of NiO and between 20 wt-% and 55 wt-% of support.

Table 1 further offers an indication of oxygen carrier performance of the resulting oxygen carrier in a chemical-looping combustion process of CO to CO₂ in a dual circulating fluidized bed reactor system at a solid inventory between 450 kg/MWth and 750 kg/MWth and at temperatures between 700°C and 1000°C. Thereby, "+" indicates good performance, "++" indicates very good performance.

**Table 1. Performance of oxygen carriers in a CO to CO₂ combustion process.**

| Example | NiO wt-% of suspension | Al₂O₃ wt-% of suspension | other compounds wt-% of suspension | | oxygen carrier performance |
|---|---|---|---|---|---|
| 1 | 50,45 | 26,33 | | | ++ |
| 2 | 40,03 | 24,56 | Ca(OH)₂ | 0,41 | |
| | | | MgO | 3,35 | + |
| 3 | 22,54 | 9,41 | y-Al₂O₃ | 2,35 | |
| 4 | 35,04 | 14,63 | y-Al₂O₃ | 3,66 | |
| 5 | 29,63 | 12,37 | y-Al₂O₃ | 3,09 | |
| 6 | 50,29 | 26,26 | | | ++ |
| 7 | 57,67 | 6,59 | NiO | 12,63 | |
| 8 | 49,77 | 20,79 | y-Al₂O₃ | 5,2 | |
| 9 | 40,87 | 17,07 | y-Al₂O₃ | 4,27 | |
| 10 | 50,92 | 26,59 | | | ++ |
| 11 | 51,12 | 26,69 | | | ++ |
| 12 | 49,90 | 26,05 | | | ++ |
| 13 | 45,54 | 23,78 | Ca(OH)₂ | 0,35 | |
| 14 | 43,78 | 27,03 | MgO | 3,65 | ++ |
| 15 | 50,03 | 26,11 | | | + |
| 16 | 48,57 | 25,75 | MgO | 0,75 | + |
| 17 | 46,56 | 29,02 | | | + |
| 18 | 45,83 | 28,57 | | | + |
| 19 | 40,65 | 25,09 | MgO | 3,39 | ++ |
| 20 | 44,69 | 30,68 | | | |
| 21 | 36,40 | 38,03 | | | |
| 22 | 37,03 | 28,01 | MgO | 7,15 | + |

## Claims

1. An oxygen carrier suitable for oxidizing a carbonaceous material consisting essentially of a porous aluminate support provided with redox active sites, **characterized, in that** said oxygen carrier is comprised of 45 wt-% to 80 wt-% of said support and of 20 wt-% to 55 wt-% of said redox active sites, whereby said redox active sites are substantially homogeneously distributed in said support phase and whereby said redox active sites are nickel (II) oxide.

2. An oxygen carrier according to claim 1, comprising preferably 60 wt-% to 70 wt-% of said support and of 30 wt-% to 40 wt-% of nickel (II) oxide.

3. An oxygen carrier according to claims 1 and 2, comprising most preferably 63 wt-% of said support and of 37 wt-% of nickel (II) oxide.

4. An oxygen carrier according to any one of claims 1 to 3, whereby said support is a salt comprising an anion, preferably aluminate, and at least one cation, preferably selected from the group: Ca²⁺, Ni²⁺ and Mg²⁺.

5. An oxygen carrier according to any one of claims 1 to 4, whereby said oxygen carrier is a powder consisting of particles whereby at least 80% of said particles have a size comprised between 50 µm and 250 µm.

6. An oxygen carrier according to any one of claims 1 to 5, whereby the attrition of said oxygen carrier is at most 1.0 % after 1 hour and at most 7.0 % after 5 hours.

7. An oxygen carrier according to any one of claims 1 to 6, whereby the crushing strength of said oxygen carrier is comprised between 0.25 N and 10 N, more preferably between 1 N and 10 N.

8. An oxygen carrier according to any one of claims 1 to 7, whereby the sphericity of said particles is at least 0.75.

9. An oxygen carrier according to any one of claims 1 to 8, whereby the support material has a cubic crystal structure with a lattice parameter comprised between 7.900 Å and 8.200 Å and whereby the crystallite size of the support material is comprised between 10 nm and 100 nm.

10. An oxygen carrier according to any one of claims 1 to 9, whereby the crystallite size of free nickel (II) oxide is comprised between 1 and 80 nm and whereby said nickel (II) oxide has a rhombohedral crystal structure with lattice parameter a comprised between 5.700 Å and 6.100 Å and lattice parameter c comprised between 7.000 Å and 7.300 Å.

11. An oxygen carrier according to any one of claims 1 to 10, obtainable by a method comprising the steps of:
a. suspending nickel (II) oxide and aluminum oxide in deionized water in a 1:1.5 to 1:2.4 ratio thereby obtaining a suspension;
b. adding organic additives such as organic binders and dispersants to said suspension;
c. spray-drying said suspension thereby obtaining a spray-dried powder;
d. sieving said spray-dried powder thereby obtaining a sieved powder;
e. calcining said sieved powder, preferably for at least 30 minutes at 1100°C to 1600°C thereby obtaining a calcined powder;
f. sintering said calcined powder, preferably for at least 30 minutes at 1100°C to 1600°C thereby obtaining said oxygen carrier.

12. A method for production of an oxygen carrier as described in claim 1-11 comprising the steps of:
a. suspending nickel (II) oxide and aluminum oxide in deionized water in a 1:1.5 to 1:2.4 ratio thereby obtaining a suspension;
b. adding organic additives such as organic binders and dispersants to said suspension;
c. spray-drying said suspension thereby obtaining a spray-dried powder;
d. sieving said spray-dried powder thereby obtaining a sieved powder;
e. calcining said sieved powder thereby obtaining a calcined powder;
f. sintering said calcined powder thereby obtaining said oxygen carrier,
**characterized, in that** nickel (II) oxide and aluminum oxide are suspended in deionized water in a 1:1.5 to 1:2.4 ratio, said organic additives are organic binders and/or dispersants, said suspension is spray-dried through a 2-fluid spray-dry nozzle positioned in the lower cone part of a spray-drier, calcining and sintering takes place under an oxygen atmosphere at temperatures between 1100°C and 1700°C, preferably between 1300°C and 1500°C, for at least 30 minutes, preferably for 4 hours.

13. A method according to claim 12, whereby 0.1 wt-% to 20 wt-% of MgO and/or Ca(OH)₂ is added to said suspension.

14. Use of an oxygen carrier as described in claims 1 to 11 in a chemical-looping process for the oxidation of said carbonaceous material to carbon dioxide at a temperature between 700°C and 1200°C, preferably at a temperature between 800°C and 1000°C, **characterized, in that** said oxygen carrier is used to perform an oxidation reaction and/or whereby said oxygen carrier is subsequently re-oxidized and used for one or more redox reactions.

15. Use of a oxygen carrier according to claim 14, whereby said carbon dioxide is captured by carbon dioxide capturing means, the heat produced is used for heating an air and/or fuel reactor or for generating electricity.
